# EUROPEAN PATENT SPECIFICATION

(11) **EP 0 693 171 B1**
(45) Date of publication and mention of the grant of the patent: **27.10.1999**
(21) Application number: 94911025.8
(22) Date of filing: 29.03.1994
(51) Int. Cl.: F28F 1/16, F28F 1/22

(54) **HEAT EXCHANGER ASSEMBLY**
WÄRMETAUSCHERANORDNUNG
ENSEMBLE ECHANGEUR DE CHALEUR

(30) Priority: 29.03.1993 AU PL805693
(43) Date of publication of application: 24.01.1996
(73) Proprietor: MELANESIA INTERNATIONAL TRUST COMPANY LIMITED, Port Vila Republic of Vanuatu (VU)
(72) Inventor: JURISICH, Milne, Main Beach, QLD 4217 (AU)
(74) Representative: Schwarz, Albin, Dr.
(86) International application number: AU9400153
(87) International publication number: WO9423257

(56) References cited:
- EP-A- 0 132 237
- EP-A- 0 183 211
- EP-A- 0 248 222
- EP-A- 0 461 781
- WO-A-82/00344
- WO-A-93/17290
- AU-A- 3 622 693
- AU-A- 4 511 279
- DE-A- 2 547 374
- DE-A- 2 626 770
- DE-B- 1 021 553
- FR-A- 2 442 419
- GB-A- 308 976
- GB-A- 1 050 287
- GB-A- 2 142 129
- US-A- 2 782 007
- PATENT ABSTRACTS OF JAPAN vol. 13, no. 74 (E-717), 20 February 1989 & JP 63 257223 A (HITACHI LTD), 25 October 1988,
- PATENT ABSTRACTS OF JAPAN, M-758, page 149; & JP,A,63 150 584 (DAIICHI HIGH FREQUENCY CO LTD) 23 June 1988 (23.06.88).

## Description

### FIELD OF THE INVENTION

This invention relates to a closed loop for circulation of fluid for heating and cooling of same, said closed loop including a heat exchanger assembly, said heat exchanger assembly including a core wherein the core has an integral structure and thus may be formed from extrusion or casting. Such assemblies are described as being formed from "primary structure" in contrast to heat exchanger elements being formed from "secondary structure" which may include additional components welded or otherwise attached to the "primary structure".

### PRIOR ART

Heat exchange elements or cores formed from primary structure are considered to be more thermally efficient than fabricated heat exchanger elements which constitute "secondary structure" and which may include a number of boundaries constituted by welds or joins. Thus not only is there a possibility of fluid leaks occurring in relation to these boundaries but also such boundaries provide zones of resistance to conduction of heat to heat transmission surfaces of the heat exchanger element.

Heat exchanger elements formed from primary structure are well known and reference may be made for example to US Patents 3,202,212; 4,565,244; 3,743,252; 4,352,008; 3,566,959; 4,567,074; 3,137,785 and 3,467,180 which all show that formation of one piece extrusions as heat exchanger elements are not new.

Reference, however, may be made to GB Patent 2,142,129 which describes a radiator for use in a central heating system having at least one section in the form of a rectangular elongate hollow body which is provided on each of the opposite sides with a plurality of spaced heat radiating fins. However, in this reference the radiator includes a cover plate which extends across the free ends of each set of fins so as to provide a plurality of open ended channels through which can flow air which is heated by a transfer of heat from a hot fluid flowing through the rectangular hollow body. This reference also describes an embodiment using a multiplicity of rectangular hollow sections. In such embodiment to form the radiator each hollow section must be welded to each other and the terminal hollow sections provided with cover plates.

A heat exchanger comprising a plurality of modules each having a plurality of channels spaced from each other and located in a central body part and also a plurality of fins extending outwardly on each side of the central body part is also described in US Patent 4,401,155. However the total heat exchanger assembly formed by a plurality of such modules is described as being particularly suited for high pressure applications such as cryogenic processes for example fluid liquefier processes and liquid pumping oxygen processes.

A particular deficiency of the abovementioned prior art is that they all describe heat exchanger elements or heat exchanger assemblies of such elements which are restricted to a particular application as in the case of GB Patent 2,142,129 or US Patent 4,401,155.

From EP-A-0 132 237 a heat exchanger element is known which comprises a flat tubular element and fins the latter placed at least on the major sides of the former, directed crosswise to the direction in which said element extends. In the region of the extremities thereof, the tubular element has parts devoid of fins the depth of which corresponds to the maximum height of the fins. The fins are manufactured by means of a cutting tool having multiple cutting edges.

### OBJECT OF THE INVENTION

It is an object of the invention to provide a closed loop for circulation of fluid for heating and cooling of same, including a heat exchanger assembly having a core formed of primary structure which may be used in a variety of different applications and is thus versatile in nature.

### SUMMARY OF THE INVENTION

The closed loop of the invention, for circulation of fluid for heating and cooling of same, includes a heat exchanger assembly, said heat exchanger assembly including:
(i) a core including one or more heat exchanger elements wherein the or each heat exchanger element:-
   (a) is formed of primary structure in the form of an extrusion; and
   (b) has a hollow body section enclosed by a peripheral wall said hollow body section including:-
      (1) a plurality of Internal webs to define a multiplicity of separate and substantially parallel flow passages ;
      (2) an internal surface and an external surface wherein said external surface in its entirety comprises a plurality of outwardly extending fins whereby the surface area of said external surface is substantially greater than the surface area of said internal surface;
      (3) said plurality of outwardly extending fins are open to atmosphere or other gaseous media without any adjacent heat exchanger element structure being present, and
(ii) at least one pair of end manifolds each having an internal space wherein there is provided plug socket engagement means between each end manifold and an adjacent end of the core to facilitate a selected flow of fluid through the core in regard to a particular use or application, said engagement means comprising:-
   (A) an outwardly extending part of said core devoid of said fins extending Into the internal space; or
   (B) an outwardly extending part of each end manifold extending into the hollow body section of the core at a proximal end thereof,
   whereby selective juxtaposition of each end manifold and the core in said plug socket arrangement achieves said selected flow which is either a single pass through the core or serpentine flow through the core wherein the fluid passes through at least two flow passages in series."

In this aspect of the invention the angle of entry or exit from the core of fluid passing through the or each hollow body section is not important and thus the end manifolds may enable the fluid to pass through each manifold and the core in a straight line or the angle of entry or exit may be at an angle to the longitudinal axis of the core.

Alternatively the fluid may pass through the or each hollow body section in serpentine fashion. In this regard the or each hollow body section may be provided with a plurality of webs so that parallel flow passages are formed wherein the fluid may make a number of passes through different flow passages as may be required. In this regard each end manifold may also be provided with diversion recesses to achieve a serpentine flow as well as access slots.

Preferably each end manifold is in the shape of a tube of similar internal dimensions to the hollow body section although this is not essential.

The heat exchanger element may be used in the form of heat exchanger strips and the length of each strip may be dictated by the requirements of a particular application. The fins of each element are open to atmosphere in use so that heat may be radiated to atmosphere by convection.

The heat exchanger assembly of the invention therefore may have a variety of different applications. Examples of such applications may be discussed below.

In relation to refrigerators, the conventional heat exchanger assembly for a refrigerator may be replaced by one or more heat exchanger elements of the invention.

Thus, for example, a plurality of heat exchanger elements in accordance with the invention may be mounted to the rear of the refrigerator in substantially parallel relationship interconnected by connection manifolds. A feed line and return line for refrigerant may be connected to appropriate end manifolds of suitable heat exchanger elements. The heat exchanger assembly may be arranged so that the refrigerant (e.g. FREON gas) passes through the hollow body section with the external fins radiating heat from the refrigerant to atmosphere by convection.

In another application the heat exchanger assembly may be used to cool the hydraulic fluid associated with hydraulic assemblies (e.g. hydraulic ram assemblies) of trucks. For example, such hydraulic ran assemblies may be used to tilt trays for unloading purposes or for actuation of compactor mechanisms. The heat exchanger elements or cores may be attached to the chassis of the truck in any suitable manner and connected by appropriate manifolding to a hydraulic fluid circuit which may include a source of hydraulic fluid, a pump, a feed line to the hydraulic ram assembly or assemblies and a return line to the hydraulic fluid source. The heat exchanger assembly is suitably included in the return line and again the spent hot fluid may be passed through the hollow body of the core and the heat discharged to atmosphere from the outwardly extending fins by convection.

In similar fashion the heat exchanger assembly may be utilised for hydraulic ram assemblies associated with agricultural machinery, earthmoving equipment or mobile cranes.

In relation to hydraulic presses the heat exchanger assembly may be mounted to a base surface of a hydraulic press.

In all of the abovementioned applications in relation to cooling of hydraulic fluid, the heat exchanger assembly will cool the hydraulic fluid as described above, i.e. by the outwardly extending fins radiating heat to atmosphere.

The heat exchanger assembly may also be used in relation to apparatus actuated by pneumatically controlled control apparatus e.g. by pneumatically operated ram assemblies in a similar manner as described above in relation to hydraulically operated apparatus, i.e. by the inclusion of the heat exchanger assembly in a return line of the pneumatic fluid circuit. This will apply to pneumatically operated machinery as well as pneumatically operated tools and the like.

From the foregoing it will also be appreciated that the heat exchanger assembly may be used in a variety of different applications inclusive of marine applications, industrial applications and waste treatment applications.

The heat exchanger assembly may also be used for heating purposes, e.g. in relation for use as a floor heater or room heater as described hereinafter. In this situation the outwardly extending fins are not open to atmosphere but may be immersed in solid media such as concrete.

However, it will also be appreciated that the heat exchanger assembly may be immersed in any other suitable solid media such as rubber or aluminium for heating or cooling purposes when it is desired that the solid media be maintained at constant temperature. This may be important, for example, in food processing or manufacture of silicon clips.

In relation to the heat exchanger element, the hollow body section is bounded by an endless peripheral wall and the plurality of fins extend outwardly from the peripheral wall. The hollow body sections may therefore comprise a flow channel for any one of the fluids described previously which may include liquids such as hydraulic fluid or gases such as air. The hollow body section is also provided with a plurality of webs wherein the or each web extends from opposed surfaces fo the peripheral wall to define one or more fluid flow passages. The webs are useful for straightening and reinforcement purposes to maintain the structural integrity of the core as well as enabling the core to be strong enough to allow fluids to pass therethrough under very high pressure.

It is important that the peripheral wall and the elongate fins of each module are each formed simultaneously in formation of the one piece extrusion or casting so that the heat exchanger module is formed from primary structure. In other words no secondary structure is present which can lead to disadvantages as discussed above. Also the internal fluid passages in the core and external flow passages created by spaces between adjacent fins are substantially parallel to each other to form a parallel flow heat exchanger core which has advantages over conventional cross flow heat exchangers. These advantages include the following:
(i) a parallel flow arrangement facilitates ducting of air both to and from the heat exchanger core. A fan may then be used to draw the air through and the hot air away from the heat exchanger core. This means that the heat exchange core used in the heat exchanger assembly of the invention does not have to rely upon ambient air passing through when used, for example, as a radiator in a motor vehicle. Therefore the heat exchanger core need not be located in front of the vehicle.
(ii) when used as a radiator, the heat exchanger core used in the heat exchanger assembly need not have a large flat surface as is the case with a conventional radiator. Therefore it can be designed in a far more compact configuration. This means that the shape of the vehicle may be changed to permit reduced wind resistance in the case of a truck or increased usage of the interior in the case of a coach or bus.
(iii) the ducting of the hot air away from the heat exchanger core also facilitates the use of the hot air for other purposes such as for the supply of heat or as a power source.
(iv) because the fluid passages are parallel this means that the heat exchanger element may be manufactured as a one piece extrusion. An extrusion could not be satisfactorily produced in the case of a crossflow arrangement. This also means that the fins form an integral part of the heat exchanger core rather than being crimped, welded or soldered to the part. This avoidance of secondary structure maximises conductivity of the heat from the fluid to be cooled to the other fluid.
(v) as a consequence of (iv) above the one piece extrusion may be cut to any desired length and may be designed to be releasably attached to other heat exchanger components such as end manifolds. Not only length but height and width are all flexible and may be varied to suit the particular application desired.
(vi) the heat exchanger core is efficient and also light. It also requires less power from the main power sources (e.g. and engine or motor) for operational purposes.

The core used in the heat exchanger assembly may have any suitable configuration. For example, the core may comprise a continuous cross section of indefinite length with the flow passages being disposed in the direction of the indefinite length. Such a configuration has proved to be particularly amenable to continuous casting or extrusion.

Preferably the peripheral wall of each module is substantially rectangular having a pair of opposed substantially horizontal parts in use which are joined by a pair of opposed vertical parts. The abovementioned webs of the primary fluid section formed by the peripheral wall are preferably substantially parallel to the vertical parts.

However it will also be appreciated that the peripheral wall may have any other suitable shape such as being circular in cross section or triangular in cross section or polygonal in cross section.

The flow passages of the hollow section may have any suitable shape or configuration and thus may be round, rectangular or polygonal in cross section.

It will be appreciated that the configuration of the flow passage or passages will depend upon the application of the heat exchanger and will also significantly depend upon the material of manufacture of the heat exchanger core.

It will also be appreciated that the elongate fins may have any suitable shape. Preferably however each fin is of constant height and width although this is not absolutely essential. Thus for example each elongate fin is of constant height and width although this is not absolutely essential. Thus for example each elongate fin may taper in width from one end to the other if required if the heat exchange element of the invention is produced as a casting. The elongate fins may also have projections or ribs on an outer surface to increase their surface area if required.

Heat exchanger cores may be used to process any suitable fluid such as gas or liquid which may be passed through the hollow body section. This may be air but may also include other heat transfer fluids such as water, ethylene glycol, ammonia, fluorocarbon compounds, silicone compounds, mineral oils and the like.

The heat exchanger cores may be of any suitable material, the suitability of a material being generally determined with reference to the application to which it is to be put. For example, use in extreme high temperature applications may dictate that a ceramic material be used for its high temperature properties, whereas for lower temperature applications it has been found that aluminium or its alloys or other metals are suitable for their relatively high thermal conductivities, permitting thicker wall sections per unit efficiency and thus increasing mechanical strength.

### BRIEF DESCRIPTION OF THE DRAWINGS

Reference may now be made to a preferred embodiment of the invention as shown in the attached drawings wherein:
FIG. 1 is a perspective view of a heat exchanger core utilised in the closed loop assembly of the invention;
FIG. 2 is a cross sectional view of the heat exchanger core shown in FIG. 1;
FIG. 3 is a cross sectional view of a heat exchanger core which may be utilised in the closed loop assembly of the invention wherein the fins have a different configuration to that shown in FIG. 1;
FIG. 4 is a cross sectional view of a heat exchanger core different to that shown in FIGS 1-3;
FIG. 5 is a perspective view of a closed loop assembly of the invention including a plurality of heat exchanger cores joined end-to-end;
FIG. 6 is a side view of a closed loop assembly of the invention showing heat exchanger cores in stacked relationship;
FIG. 7 is a perspective view of a closed loop assembly of the invention comprising heat exchanger cores arranged in a side-by-side arrangement;
FIG. 8 is a perspective view of a closed loop assembly of the invention including a core and associated end manifold;
FIG. 9 is a perspective view similar to FIG. 8 but illustrating a different type of manifold;
FIG. 10 is a perspective view similar to FIG. 9 but illustrating an end manifold different to that shown in FIGS 8-9;
FIG. 11 is a schematic view of a closed loop assembly of the invention showing one type of serpentine flow through the core;
FIG. 12 is a similar view to FIG. 11 showing a different type of serpentine flow to that shown in FIG. 11;
FIG. 13 is a perspective view of a closed loop assembly of the invention showing heat exchanger elements in a side-by-side arrangement with associated end manifolds;
FIG. 14 is a similar view to FIG. 11 showing a different flow arrangement;
FIG. 15 is a similar view to FIG. 12 showing the use of different end manifolds;
FIG. 16 is a similar view to FIG. 13 showing the use of different end manifolds;
FIG. 17 is a perspective view of a refrigerator having a closed loop assembly of the invention associated therewith;
FIG. 18 is a flow circuit of refrigerant in the heat exchanger assembly of FIG. 17;
FIG. 19 is a perspective view of a wall heater utilising a closed loop assembly of the invention;
FIG. 20 is a perspective view of a skirting board assembly of a room utilising a closed loop assembly of the invention;
FIG. 21 is a view of a room heater using a closed loop assembly of the invention;
FIG. 22 is a flow circuit applicable to FIGS 19, 20 or 21;
FIG. 23 is a view of a fuel cooling system for a vehicle utilising a closed loop assembly of the invention;
FIG. 24 is a view of a flow circuit applicable to the fuel cooling system of FIG. 23;
FIG. 25 is a view of a flow circuit applicable to any form of hydraulically operated apparatus;
FIG. 26 is a perspective view of a closed loop assembly of the invention utilised with an oven or stove for the purpose of generating heat; and
FIG. 27 is a view of a flow diagram utilising a closed loop assembly of the invention for the purpose of cooling a transformer.

### DETAILED DESCRIPTION OF THE PREFERRED EMBODIMENTS

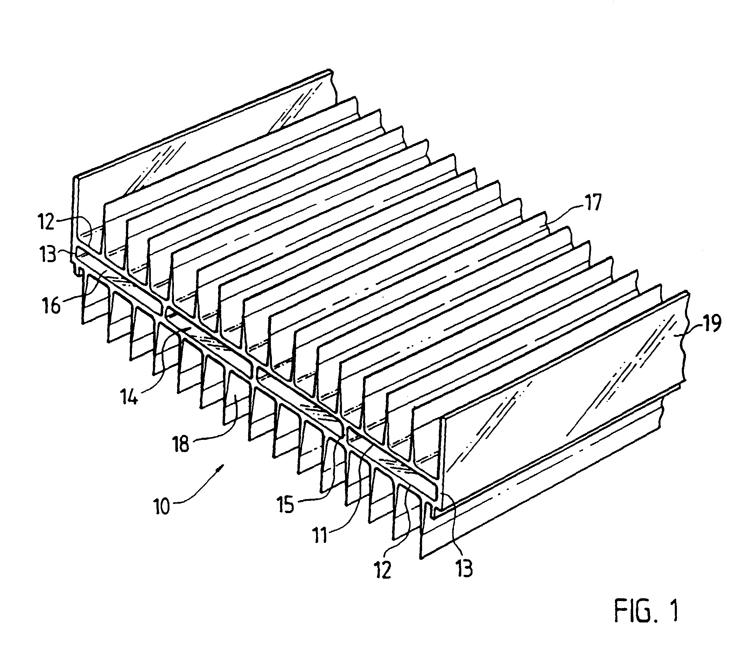

In FIG. 1 there is shown heat exchanger element or core 10 having a peripheral wall 11 of shallow rectangular configuration which has opposed horizontal parts 12 and opposed vertical parts 13. The peripheral wall 11, which is of a continuous nature, defines a closed fluid section 14. Webs 15 are included to define separate flow passages 16.

There are also included a first array of fins 17 extending away from one horizontal part 12 and a second array of fins 18 extending away from the opposed horizontal part 13 of peripheral wall 11. End walls 19 may also be included although these walls could be the same height as fins 17 if desired. The fins 17 and 18 may extend into atmosphere or be embedded in a solid medium as described hereinafter.

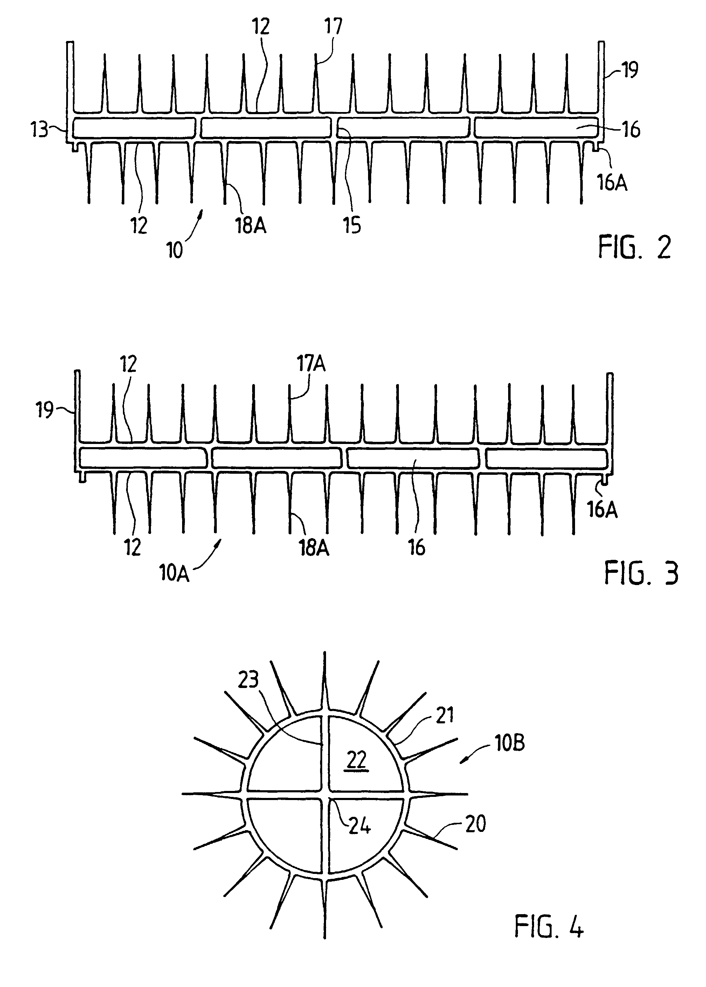

In relation to FIG. 2 there is shown a heat exchanger core 10 having fins 17 and 18 in staggered relationship with each other as shown in FIG. 1. Ribs 16A may also be utilised for releasably interconnecting adjacent cores 10 to each other if desired in either stacked or side-by-side arrangement.

In FIG. 3 there is shown core 10A wherein fins 17A and 18A may be in opposed relationship.

In FIG. 4 there is shown core 10B having outwardly projecting fins 20, peripheral wall 21 having a circular shape as shown and separate flow passages 22 constituted by reinforcing webs 23 joined to an axial longitudinal rib 24.

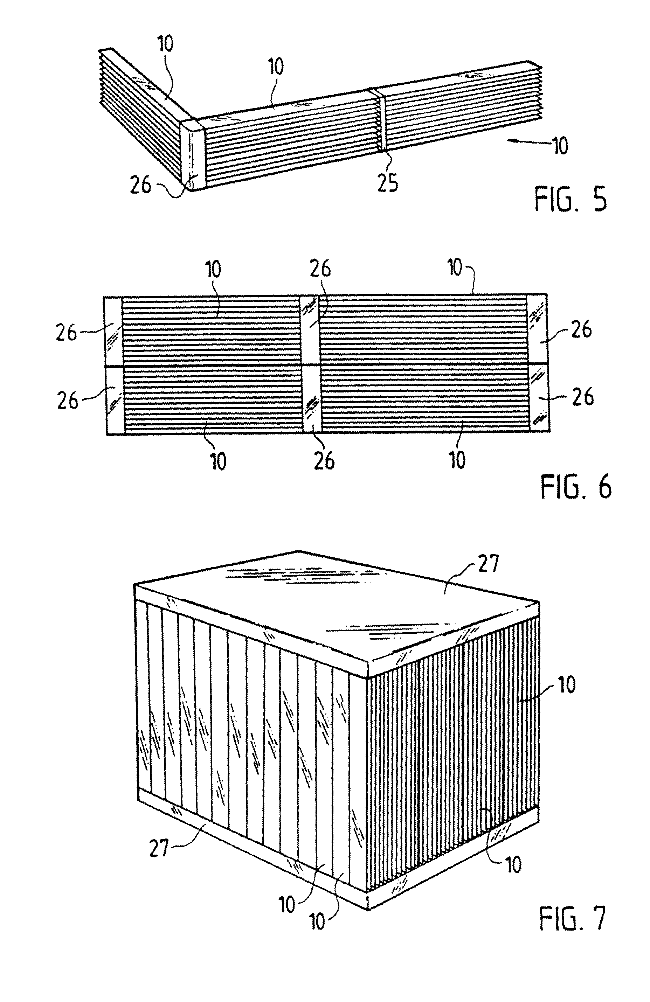

In FIG. 5 there is shown adjacent heat exchanger assemblies comprising cores 10, end manifolds 25, and corner manifolds 26 for facilitating flow of fluid between adjacent cores 10.

In FIG. 6 there is shown manifolds 10 in a stacked relationship or parallel arrangement wherein fluid flow may be facilitated by interconnecting manifolds 26.

In FIG. 7 there is an arrangement whereby adjacent cores 10 are aligned vertically and side-by-side to be interconnected by end manifolds 27 facilitating flow of fluid between adjacent manifolds 10.

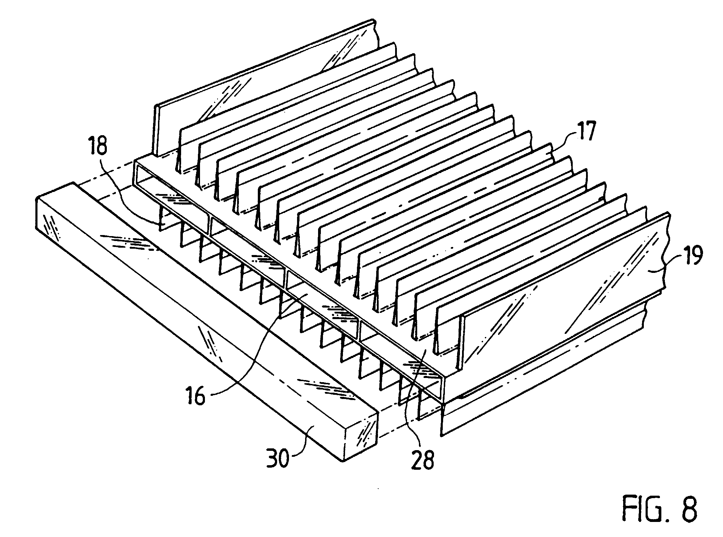

FIG. 8 illustrates one form of attachment of an end manifold to an adjacent core or element 10 wherein fins 17 and 18 are spaced from the respective ends of peripheral wall 11 to define a retaining ledge 28 for engagement of end manifold 30. Any form of releasable attachment means (not shown) may be utilised to attach manifold 30 to core 10.

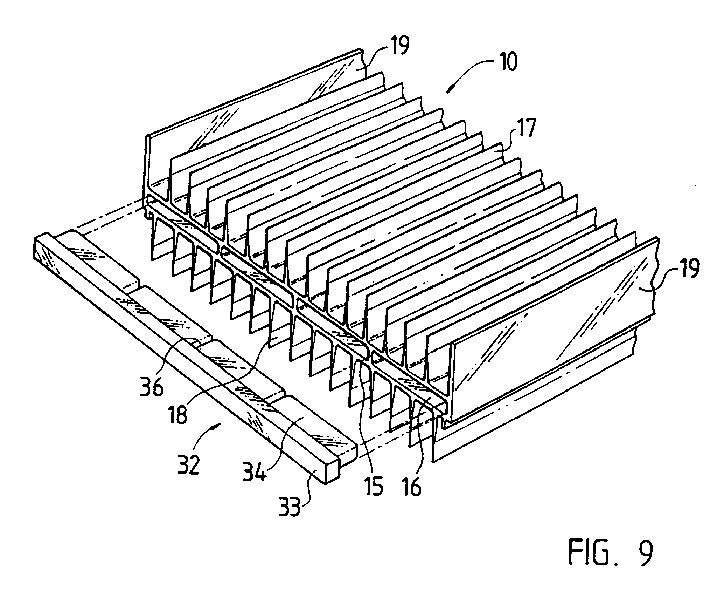

FIG. 9 illustrates another form of attachment of manifold 32 to core 10 where manifold 32 includes a longitudinal support 33 having a plurality of separate components 34 each of which may be accommodated within a respective flow passage 16. As in the case of FIG. 8, any form of releasable attachment means (not shown) may be utilised to attach manifold 32 to core 10. Partitions 15 may engage with a respective slot 36 as shown.

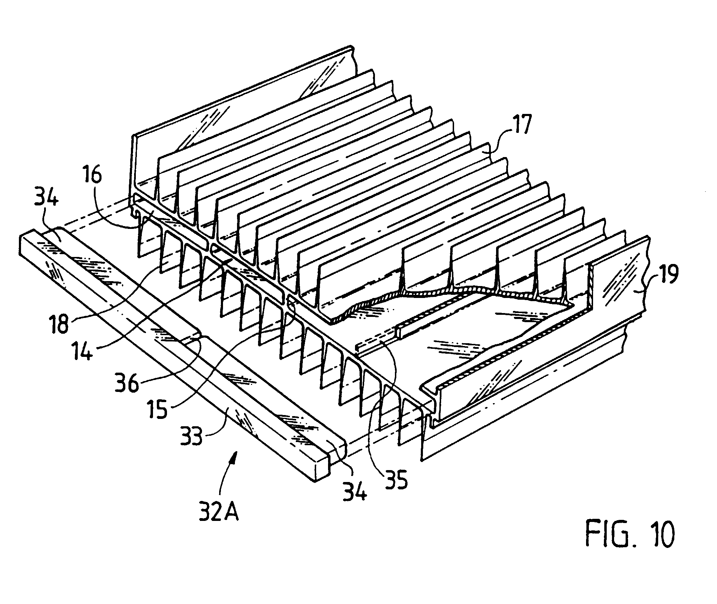

FIG. 10 shows a similar view to FIG. 9 but illustrating the feature of the partitions 15 being cut away at 35 from the ends of flow sections 14 to accommodate components 34 of manifolds 32A.

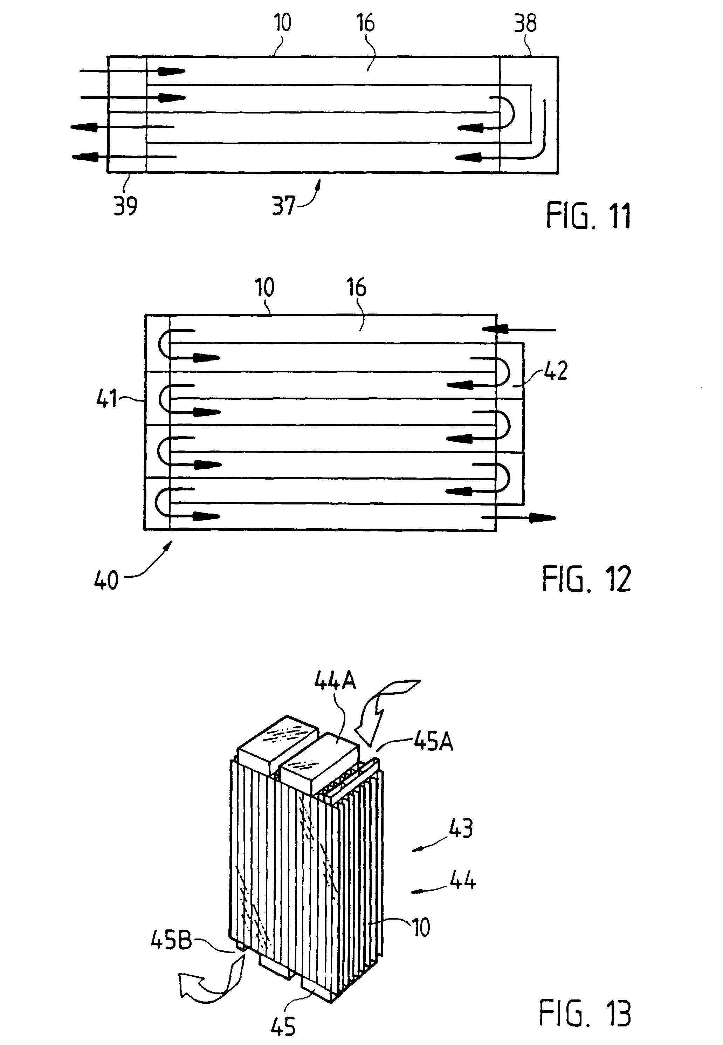

FIG. 11 shows a heat exchanger assembly 37 wherein one or more cores 10 having flow passages 16 co-operates with end manifolds 38 and 39 so as to produce a serpentine flow path of fluid in flow passages 16 as shown.

FIG. 12 shows a heat exchanger assembly 40 wherein one or more cores 10 having flow passages 16 co-operates with end manifolds 41 and 42 to produce a serpentine flow different to that shown in FIG. 11.

FIG. 13 shows a heat exchanger assembly 43 wherein core 44 comprising a plurality of elements 10 is associated with end manifolds 44A and 45 whereby end manifold 44 functions as an inlet manifold while manifold 45 functions as an outlet manifold. The inlet 45A and outlet 45B are indicated by the arrows.

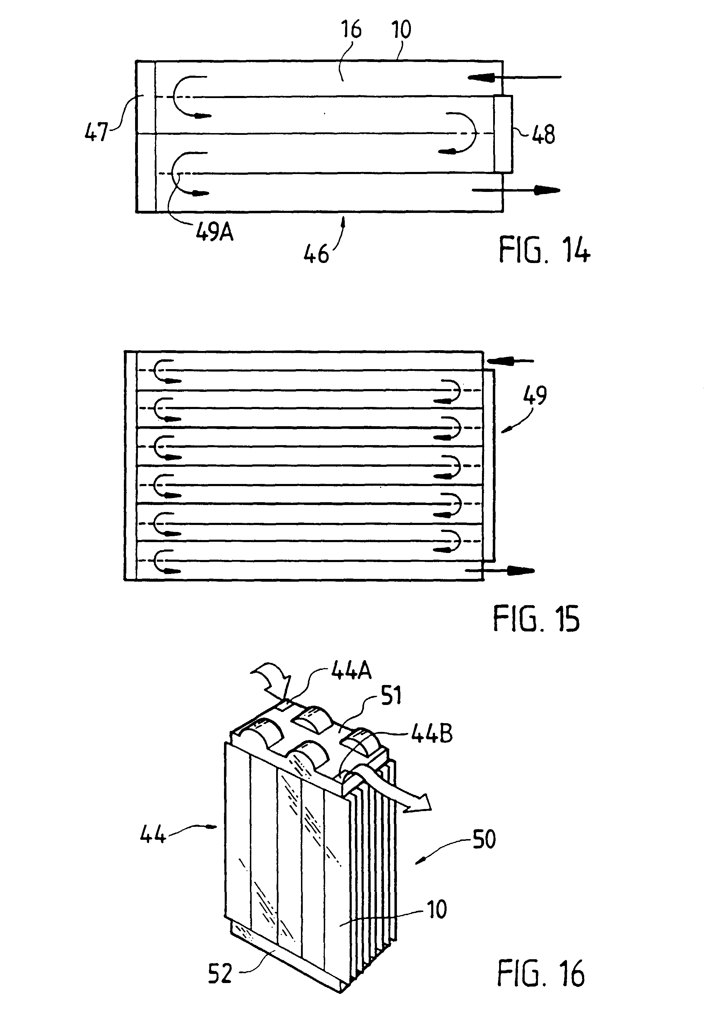

FIG. 14 shows a heat exchanger assembly 46 wherein one or more cores 10 having flow passages 16 co-operate with end manifolds 47 and 48 to achieve the flow path shown whereby fluid may pass from one fluid channel 16 into an adjacent fluid channel 16 by the provision of slots 49A.

FIG. 15 shows a heat exchanger assembly 49 having a similar flow path to that shown in FIG. 14.

FIG. 16 shows a heat exchanger assembly 50 similar to that shown in FIG. 13 wherein one end manifold 51 functions as an inlet-outlet manifold and another end manifold 52 functions purely for diverting fluid flow from one fluid passage 16 into an adjacent fluid passage 16. The inlet 44A and outlet 44B are shown by the arrows. The heat exchanger 50 may be used to obtain the flow paths shown in FIGS. 14-15.

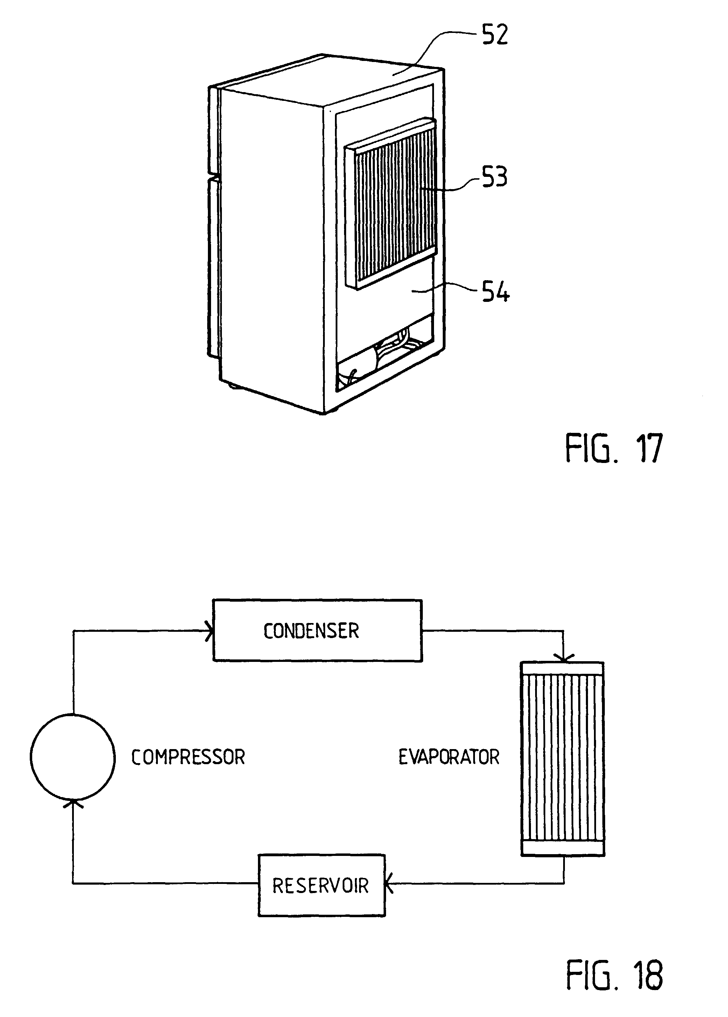

FIG. 17 shows a refrigerator 52 having a heat exchanger assembly 53 attached to a rear wall 54 thereof. Such heat exchanger may utilise a serpentine flow path of refrigerant as described above.

In the flow circuit of FIG. 18 heat exchanger 53 may comprise the evaporator shown in the flow circuit which relates to the passage of refrigerant from a refrigerant reservoir, and subsequently through a compressor or pump to the condenser before passage to the evaporator.

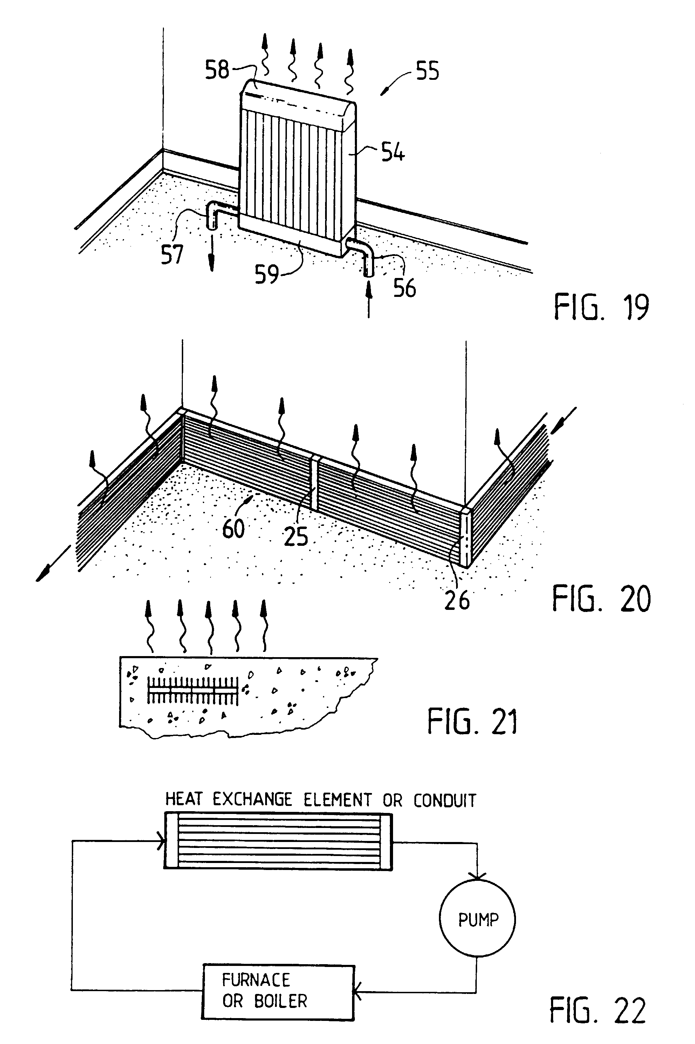

FIG. 19 shows a heat exchanger assembly 54 being utilised as a room heater 55 wherein heat may be radiated from the fins to warm the room as shown by the arrows in full outline by passage of a heated liquid (e.g. heated water or oil) passing through the assembly 54 from inlet 56 to outlet 57 which is also facilitated by end modules 58 and 59.

FIG. 20 shows the provision of a skirting board 60 functioning as a room heater of a room comprising individual cores 10 interconnected by manifolds 25 and 26 as shown in FIG. 5 wherein the arrows indicate the heat energy being radiated outwardly from skirting board 60.

FIG. 21 shows the immersion of a heat exchanger assembly 61 in solid media such as concrete as described previously which may also function as a room heater as shown by the arrows in full outline.

FIG. 22 shows a flow circuit suitable for any one of FIGS. 19, 20 or 21 wherein a furnace or boiler may provide heated air or water for provision of heat which may be pumped through the circuit as shown.

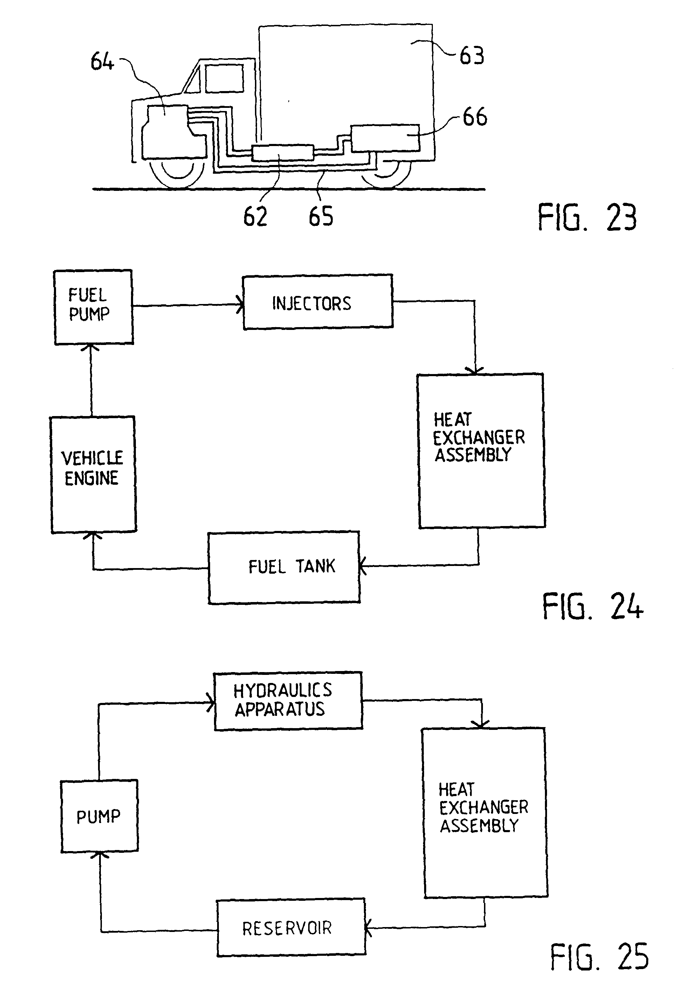

FIG. 23 shows a heat exchanger assembly 62 being utilised as cooling medium for fuel in a vehicle 63. In this situation fuel from engine 64 is passed through conduit 65 to heat exchanger assembly 62 which may comprise a single element 10 or a plurality of elements 10 connected in series. There is also shown fuel tank 66 which passes fuel to the engine through conduit 65.

FIG. 24 shows a flow circuit suitable for the FIG. 23 arrangement. The fuel pump associated with engine 64 passes the fuel through the fuel injectors before the hot fuel is passed to heat exchanger assembly 62 for cooling purposes.

As described above, a heat exchanger assembly may also be utilised for the purposes of cooling hydraulic fluid associated with any form of hydraulically operated apparatus as shown in the flow circuit of FIG. 25.

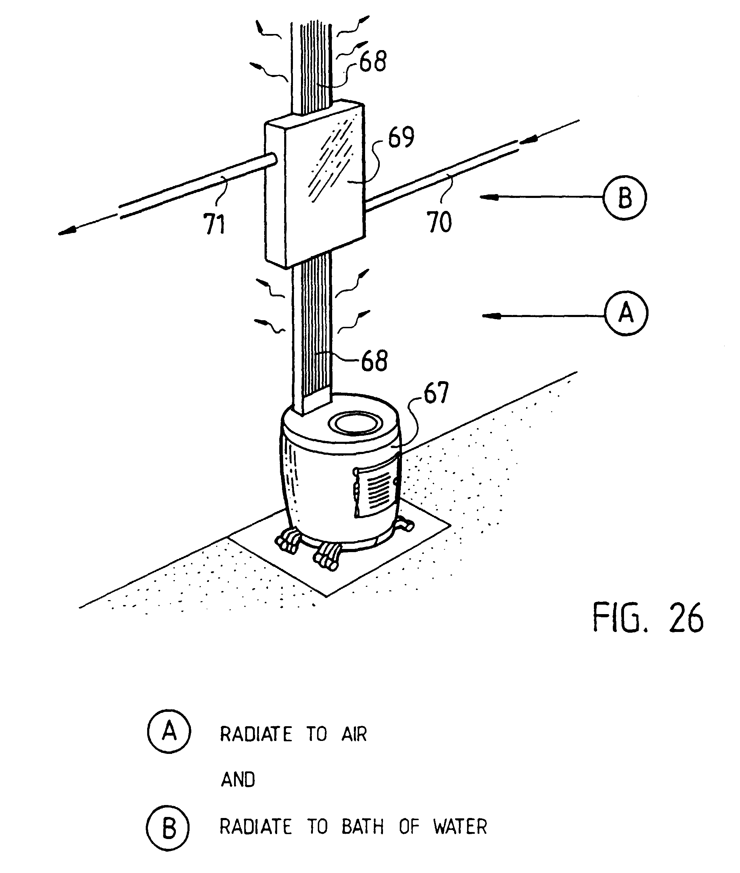

In the arrangement shown in FIG. 26 a "pot bellied" stove 67 may have a heat exchanger assembly 68 functioning as a flue for gases emanating from stove 67 which may provide a source of heat energy as shown by the arrows in full outline. There also may be provided a water jacket 69 whereby the gases may be utilised for heating water passed into jacket 69 via inlet conduit 70 and outlet conduit 71. A further heat exchanger assembly 68 may also be connected to water jacket 69 for heating purposes.

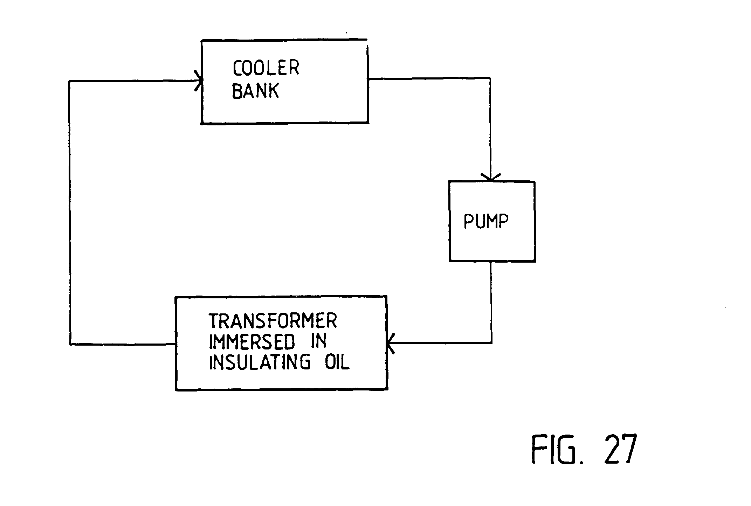

Finally, in FIG. 27 there is shown how the heat exchanger assembly may be utilised for cooling insulating oil associated with transformers wherein a cooler bank of cores 10 as shown in FIG. 7 may be used to cool the insulating oil which is passed back to the transformer through the agency of the pump as shown. In some cases the pump may be omitted and fluid flow may occur through natural convection.

## Claims

1. A closed loop for circulation of fluid for heating and cooling of same, said closed loop including a heat exchanger assembly, said heat exchanger assembly including:-
(i) a core (10) including one or more heat exchanger elements wherein the or each heat exchanger element:-
(a) is formed of primary structure in the form of an extrusion; and
(b) has a hollow body section (16) enclosed by a peripheral wall (11), said hollow body section (16) including: -
(1) a plurality of internal webs (15) to define a multiplicity of separate and substantially parallel flow passages ;
(2) an internal surface and an external surface wherein said external surface in its entirety comprises a plurality of outwardly extending fins (17, 18) whereby the surface area of said external surface is substantially greater than the surface area of said internal surface;
(3) said plurality of outwardly extending fins (17, 18) are open to atmosphere or other gaseous media without any adjacent heat exchanger element structure being present, and
(ii) at least one pair of end manifolds (30,32) each having an internal space wherein there is provided plug socket engagement means between each end manifold (32) and an adjacent end of the core (10) to facilitate a selected flow of fluid through the core (10) in regard to a particular use or application, said engagement means comprising:-
(A) an outwardly extending part of said core (10) devoid of said fins (17,18) exending into the internal space; or
(B) an outwardly extending part of each end manifold extending into the hollow body section (16) of the core (10) at a proximal end thereof,
whereby selective juxtaposition of each end manifold (30,32) and the core (10) in said plug socket arrangement achieves said selected flow which is either a single pass through the core (10) or serpentine flow through the core (10) wherein the fluid passes through at least two flow passages in series."

2. A closed loop as claimed in Claim 1 wherein said internal space of each end manifold (30) occupies a predominant part of the end manifold (30).

3. A closed loop as claimed in Claim 1 wherein the internal space of each manifold (30,32) has a height substantially equal to the height of the hollow body section (16).

4. A closed loop as claimed in Claim 1 wherein each end manifold (30,32) has a length which is substantially equal to the width of the hollow body section (16).

5. A closed loop as claimed in Claim 1 wherein one end manifold (30,32) is an inlet manifold and the other end manifold is an outlet manifold.

6. A closed loop as claimed in Claim 1 wherein one end manifold (39) functions as an inlet as well as an outlet for said fluid.

7. A closed loop as claimed in Claim 1 wherein the fluid passes through the or each hollow body section (16) in a serpentine flow path.

8. A closed loop as claimed in Claim 1 wherein the fluid makes a single pass through the or each hollow body section (16).

9. A closed loop as claimed in Claim 1 comprising a plurality of said heat exchanger elements whereby each element is connected to each other in end-to-end arrangement so as to provide an elongate strip.

10. A closed loop as claimed in Claim 1 comprising a plurality of said heat exchanger elements whereby each element is connected to each other in a side-by-side arrangement.

11. A closed loop as claimed in Claim 1 for use in refrigerators (52) whereby refrigerant from the refrigerator (52) may be passed through said heat exchanger assembly.

12. A closed loop as claimed in Claim 1 for use in cooling hydraulic fluid associated with hydraulically operated apparatus whereby said heat exchanger assembly is connected in a return line of a hydraulic fluid circuit including said hydraulically operated apparatus as well as a reservoir for said hydraulic fluid and pump means.

13. A closed loop as claimed in Claim 1 for use as a room heater or floor heater wherein said heat exchanger assembly is included in a flow circuit comprising a source of heated fluid and a pump whereby said heated fluid may be passed through said heat exchanger assembly for the purpose of providing heat energy.

14. A closed loop as claimed in Claim 13 wherein said heat exchanger assembly comprises a plurality of heat exchanger elements connected in end-to-end relationship by manifolds located between adjacent heat exchanger elements so as to provide an elongate heating strip which may be utilised as a skirting board (60) for a room of a building.

15. A closed loop as claimed in Claim 1 for use in heating or cooling solid media wherein said heat exchanger assembly is embedded in said solid media and said fluid may be utilised to heat or cool said solid media.

16. A closed loop as claimed in Claim 1 for use in cooling fuel of vehicles (63) whereby vehicle fuel is passed through said heat exchanger assembly prior to being transferred to a vehicle engine (64).

17. A closed loop as claimed in Claim 1 for use in cooling insulating oil associated with transformers wherein a cooler bank comprising a plurality of said heat exchanger assemblies is used to cool insulating oil associated with said transformers.

18. A method of cooling hydraulic fluid associated with hydraulically operated apparatus including the step of including a closed loop as claimed In Claim 1 in a return line of a hydraulic fluid circuit for said hydraulic fluid which also includes a reservoir for said hydraulic fluid, said hydraulically operated apparatus and a pump means for pumping said hydraulic fluid.

19. A room heater including a closed loop as claimed in Claim 1 wherein said closed loop comprises a plurality of said heat exchanger elements connected in end-to-end arrangement by said end manifolds whereby said end manifolds interconnects adjacent heat exchanger elements.

20. A closed loop as claimed in Claim 1 which also includes a pump and a reservoir of fluid which fluid is to be passed through said heat exchanger assembly and fluid actuated apparatus wherein said fluid after passage through fluid actuated apparatus is adapted to be cooled or heated by passage of said fluid through the heat exchanger assembly.

## Patentansprüche

1. Geschlossenes Umlaufsystem zur Zirkulation von Fluid zwecks Erwärmung und Abkühlung desselben, wobei das geschlossene Umlaufsystem eine Wärmetauschereinheit aufweist, welche Wärmetauschereinheit folgendes enthält:
(i) einen Kern (10) mit einem oder mehreren Wärmetauscherelementen, wobei das oder jedes Wärmetauscherelement:
(a) durch eine Primärstruktur in Form einer Extrusion gebildet ist; und
(b) einen von einer Umfangswand (11) umgebenen Hohlkörperabschnitt (16) aufweist, welcher Hohlkörperabschnitt (16) enthält:
(1) eine Mehrzahl von Innenstegen (15) zwecks Festlegung einer Vielzahl von voneinander getrennten und im wesentlichen parallelen Strömungsdurchlässen;
(2) eine Innenfläche und eine Außenfläche, wobei die Außenfläche in ihrer Gesamtheit eine Mehrzahl von sich nach außen erstreckenden Rippen (17, 18) aufweist und die Oberfläche der Außenfläche wesentlich größer als die Oberfläche der Innenfläche ist;
(3) wobei die Mehrzahl der sich nach außen erstreckenden Rippen (17, 18) in die Atmosphäre oder andere gasförmige Medien mündet, ohne daß dort eine benachbarte Wärmetauscherelement-Struktur vorgesehen ist; und
(ii) mindestens ein Paar von Endverteilerstücken (30, 32), von denen jedes einen Innenraum aufweist, in welchem eine Steckfassungs-Eingriffeinrichtung zwischen jedem Endverteilerstück (32) und einem angrenzenden Ende des Kems (10) zwecks Erleichterung eines gezielten Fluidstroms durch den Kern (10) in Hinblick auf einen speziellen Einsatz oder Anwendungsbereich vorgesehen ist, welche Eingriffseinrichtung umfaßt:
(A) einen sich nach außen erstreckenden Teil des Kerns (10) ohne Rippen (17, 18), der sich in den Innenraum erstreckt; oder
(B) einen sich nach außen erstreckenden Teil jedes Endverteilerstücks, der sich in den Hohlkörperabschnitt (16) des Kems (10) an einem proximalen Ende desselben erstreckt,
wobei durch die gezielte Nebeneinanderanordnung jedes Endverteilerstücks (30, 32) und des Kerns (10) in der Steckfassunganordnung der gezielte Strom erreicht wird, u.zw. entweder in Form eines einfachen Durchlaufs durch den Kern (10) oder als schlangenlinienförmiger Strom durch den Kern (10), wobei das Fluid durch mindestens zwei in Serie angeordnete Strömungsdurchläufe hindurchtritt.

2. Geschlossenes Umlaufsystem nach Anspruch 1, worin der Innenraum jedes Endverteilerstücks (30) einen überwiegenden Teil des Endverteilerstücks (30) einnimmt.

3. Geschlossenes Umlaufsystem nach Anspruch 1, worin der Innenraum jedes Verteilerstücks (30, 32) eine Höhe aufweist, die im wesentlichen gleich der Höhe des Hohlkörperabschnitts (16) ist.

4. Geschlossenes Umlaufsystem nach Anspruch 1, worin jedes Endverteilerstück (30, 32) eine Länge aufweist, die im wesentlichen gleich der Breite des Hohlkörperabschnitts (16) ist.

5. Geschlossenes Umlaufsystem nach Anspruch 1, worin ein Endverteilerstück (30, 32) ein Einlaßverteilerstück und das andere Endverteilerstück ein Auslaßverteilerstück ist.

6. Geschlossenes Umlaufsystem nach Anspruch 1, worin ein Endverteilerstück (39) sowohl als Einlaß als auch als Auslaß für das Fluid dient.

7. Geschlossenes Umlaufsystem nach Anspruch 1, worin das Fluid den oder jeden Hohlkörperabschnitt (16) in einem schlangenlinienförmigen Durchflußweg durchströmt.

8. Geschlossenes Umlaufsystem nach Anspruch 1, worin das Fluid den oder jeden Hohlkörperabschnitt (16) in einem einfachen Durchlauf durchströmt.

9. Geschlossenes Umlaufsystem nach Anspruch 1 mit einer Mehrzahl von Wärmetauscherelementen, wobei jedes Element in einer Kopf-an-Kopf-Anordnung mit dem anderen verbunden ist, so daß ein länglicher Streifen geschaffen wird.

10. Geschlossenes Umlaufsystem nach Anspruch 1 mit einer Mehrzahl von Wärmetauscherelementen, wobei jedes Element in einer Nebeneinanderanordnung mit dem anderen verbunden ist.

11. Geschlossenes Umlaufsystem nach Anspruch 1 zur Verwendung in Kühlschränken (52), wobei Kühlmittel aus dem Kühlschrank (52) durch die Wärmetauschereinheit hindurchgeleitet werden kann.

12. Geschlossenes Umlaufsystem nach Anspruch 1 zur Verwendung bei der Kühlung eines einem hydraulisch betätigten Gerät zugehörigen Hydraulikfluids, wobei die Wärmetauschereinheit in einer Rückflußleitung eines Hydraulikfluidkreises, enthaltend das hydraulisch betätigte Gerät sowie einen Behälter für das Hydraulikfluid und Pumpeinrichtungen, geschaltet ist.

13. Geschlossenes Umlaufsystem nach Anspruch 1 zur Verwendung als Raumheizung oder Bodenheizung, worin die Wärmetauschereinheit in einem Strömungskreis mit einer Quelle für erwärmtes Fluid und einer Pumpe enthalten ist, wobei das erwärmte Fluid zur Bereitstellung von Heizenergie durch die Wärmetauschereinheit durchgeleitet werden kann.

14. Geschlossenes Umlaufsystem nach Anspruch 13, worin die Wärmetauschereinheit eine Mehrzahl von Wärmetauscherelementen aufweist, welche durch zwischen benachbarten Wärmetauscherelementen angeordnete Verteilerstücke in einer Kopf-an-Kopf-Anordnung miteinander verbunden sind, so daß ein länglicher Heizstreifen geschaffen wird, der als Sockelleiste (60) für einen Raum eines Gebäudes verwendet werden kann.

15. Geschlossenes Umlaufsystem nach Anspruch 1 zur Verwendung beim Erwärmen oder Abkühlen von festen Medien, wobei die Wärmetauschereinheit in den festen Medien eingebettet ist und das Fluid zur Erwärmung oder Abkühlung der festen Medien verwendet werden kann.

16. Geschlossenes Umlaufsystem nach Anspruch 1 zur Verwendung beim Kühlen von Kraftstoffen von Fahrzeugen (63), wobei der Fahrzeugkraftstoff vor der Zuleitung zu einem Fahrzeugmotor (64) durch die Wärmetauschereinheit geleitet wird.

17. Geschlossenes Umlaufsystem nach Anspruch 1 zur Verwendung beim Kühlen von Transformatoren zugehörigem Isolieröl, worin eine Kühlbank mit einer Mehrzahl von Wärmetauschereinheiten zum Kühlen des den Transformatoren zugehörigen Isolieröls verwendet ist.

18. Verfahren zum Kühlen von einem hydraulisch betätigten Gerät zugehörigem Hydraulikfluid, umfassend den Schritt des Einfügens eines geschlossenen Umlaufsystems nach Anspruch 1 in eine Rückflußleitung eines Hydraulikfluidkreises für das Hydraulikfluid, welcher auch einen Behälter für das Hydraulikfluid, das hydraulisch betätigte Gerät und eine Pumpeinrichtung zum Pumpen des Hydraulikfluids enthält.

19. Raumheizung enthaltend ein geschlossenes Umlaufsystem nach Anspruch 1, worin das geschlossene Umlaufsystem eine Mehrzahl von in einer Kopf-an-Kopf-Anordnung durch die Endverteilerstücke miteinander verbundenen Wärmetauscherelementen aufweist, wobei das Endverteilerstück nebeneinanderliegende Wärmetauscherelemente miteinander verbindet.

20. Geschlossenes Umlaufsystem nach Anspruch 1, welches auch eine Pumpe und einen Fluidbehälter umfaßt, welches Fluid durch die Wärmetauschereinheit und das fluidbetätigte Gerät hindurchzuleiten ist, wobei das Fluid nach dem Durchtritt durch das fluidbetätigte Gerät durch Durchleiten des Fluids durch die Wärmetauschereinheit gekühlt oder erwärmt werden kann.

## Revendications

1. Circuit fermé destiné à la circulation d'un fluide pour réchauffer et refroidir celui-ci, le circuit fermé précité comprenant un agencement d'échange de chaleur, l'agencement d'échange de chaleur comprenant
[l] un noyau (10) comprenant un ou plusieurs éléments d'échange de chaleur, dans lequel le ou chaque élément d'échange de chaleur :
[a] est formé par une structure primaire sous la forme d'une extrusion et
[b] possède une section de corps creux (16) entourée par une paroi périphérique (11), ladite section de corps creux (16) comprenant :
[1] plusieurs entretoises internes (15) pour définir de multiples passages d'écoulement séparés et sensiblement parallèles ;
[2] une surface interne et une surface externe, ladite surface externe comprenant, dans son intégralité, plusieurs ailettes (17, 18) s'étendant vers l'extérieur, la zone de surface de ladite surface externe étant sensiblement plus grande que la zone de surface de ladite surface interne ;
[3] chaque ailette précitée (17,18) s'étendant vers l'extérieur étant ouverte à l'atmosphère ou à un autre milieu gazeux sans qu'une structure d'élément d'échange de chaleur adjacente ne soit présente; et
[ii] au moins une paire de collecteurs d'extrémité (30,32) présentant chacun un espace intérieur dans lequel sont prévus des moyens d'engagement de prise de courant entre chaque collecteur d'extrémité (32) et une extrémité adjacente du noyau (10) pour faciliter un écoulement sélectionné de fluide à travers le noyau (10) par rapport à un usage ou à une application particulier, ledit moyen d'engagement comprenant :
[A] une partie s'étendant vers l'extérieur du noyau précité (10) qui est dépourvue desdites ailettes (17,18) s'étendant dans l'espace intérieur; ou
[B] une partie s'étendant vers l'extérieur de chaque collecteur d'extrémité s'étendant dans la section de corps creux (16) du noyau (10) à une extrémité proximale de celui-ci,
une juxtaposition sélective de chaque collecteur d'extrémité (32) et du noyau (10) dans ledit agencement de prise de courant précité réalisant l'écoulement sélectionné qui est soit un passage unique à travers le noyau (10) soit un écoulement en serpentin à travers le noyau (10) dans lequel le fluide passe par au moins deux passages d'écoulement en série.

2. Circuit fermé suivant la revendication 1, dans lequel l'espace interne précité de chaque collecteur d'extrémité (30) occupe une part prédominante du collecteur d'extrémité (30).

3. Circuit fermé suivant la revendication 1, dans lequel l'espace intérieur de chaque collecteur (30,32) possède une hauteur qui est sensiblement égale à la hauteur de la section de corps creux (16).

4. Circuit fermé suivant la revendication 1, dans lequel chaque collecteur d'extrémité (30, 32) possède une longueur qui est sensiblement égale à la largeur de la section de corps creux (16).

5. Circuit fermé suivant la revendication 1, dans lequel un collecteur d'extrémité (30, 32) est un collecteur d'entrée et l'autre collecteur d'extrémité est un collecteur de sortie.

6. Circuit fermé suivant ta revendication 1, dans lequel un collecteur d'extrémité (39) fonctionne aussi bien comme entrée que comme sortie pour le fluide précité.

7. Circuit fermé suivant la revendication 1, dans lequel le fluide passe à travers la ou chaque section de corps creux (16) suivant un trajet d'écoulement en serpentin.

8. Circuit fermé suivant la revendication 1, dans lequel le fluide effectue un passage unique à travers la ou chaque section de corps creux (16).

9. Circuit fermé suivant la revendication 1 comprenant plusieurs éléments d'échange de chaleur précités, chaque élément étant mutuellement connecté selon un agencement bout-à-bout, de façon à fournir une bande allongée.

10. Circuit fermé suivant la revendication 1, comprenant plusieurs éléments d'échange de chaleur précités, chaque élément étant mutuellement connecté suivant un agencement côte-à-côte.

11. Circuit fermé suivant la revendication 1 destiné à être utilisé dans les réfrigérateurs (52), un moyen réfrigérant du réfrigérateur (52) pouvant être amené par l'agencement d'échange de chaleur précité.

12. Circuit fermé suivant la revendication 1 destiné à être utilisé pour le refroidissement d'un fluide hydraulique associé à un dispositif actionné de façon hydraulique, l'agencement d'échange de chaleur précité étant connecté dans une ligne de retour d'un circuit de fluide hydraulique comprenant le dispositif actionné de façon hydraulique précité, ainsi qu'un réservoir destiné au fluide hydraulique précité et un moyen de pompage.

13. Circuit fermé suivant la revendication 1 destiné à être utilisé comme chauffage d'une pièce ou comme chauffage d'un sol, dans lequel l'agencement d'échange de chaleur précité est compris dans un circuit d'écoulement comprenant une source de fluide chauffé et une pompe, le fluide chauffé précité pouvant être amené par l'agencement d'échange de chaleur afin de procurer d'énergie thermique.

14. Circuit fermé suivant la revendication 13 dans lequel l'agencement d'échange de chaleur précité comprend plusieurs éléments d'échange de chaleur connectés suivant un rapport bout-à-bout par des collecteurs situés entre des éléments d'échange de chaleur adjacents, de façon à procurer une bande de chauffage allongée qui peut être utilisé comme socle de lambris (60) pour une pièce d'un bâtiment.

15. Circuit fermé suivant la revendication 1 destiné à être utilisé pour le chauffage ou le refroidissement de milieux solides, dans lequel ledit agencement d'échange de chaleur est noyé dans le milieu solide précité et le fluide précité peut être utilisé pour chauffer ou refroidir le milieu solide précité.

16. Circuit fermé suivant la revendication 1 destiné à être utilisé pour refroidir le combustible de véhicules (63), le combustible de véhicules étant amené par l'agencement d'échange de chaleur avant d'être transféré vers un moteur de véhicule (64).

17. Circuit fermé suivant la revendication 1 destiné à être utilisé pour le refroidissement d'huile Isolante associée à des transformateurs, dans lequel un banc refroidisseur comprenant plusieurs agencements d'échange de chaleur précités est utilisé pour refroidir l'huile Isolante associée aux transformateurs précités.

18. Procédé de refroidissement de fluide hydraulique associé à un dispositif actionné de façon hydraulique comprenant l'étape consistant à inclure un circuit fermé tel que revendiqué dans le revendication 1 dans une ligne de retour d'un circuit de fluide hydraulique destiné audit fluide hydraulique qui comprend également un réservoir destiné au fluide hydraulique précité, le dispositif actionné de façon hydraulique précité et un moyen de pompage destiné à pomper le fluide hydraulique précité.

19. Chauffage d'une pièce comprenant un circuit fermé tel que revendiqué dans la revendication 1, dans lequel le circuit fermé précité comprend plusieurs éléments d'échange de chaleur précités connectés suivant un agencement bout-à-bout par les collecteurs d'extrémité précités, lesdits collecteurs d'extrémité Interconnectant des éléments d'échange de chaleur adjacents.

20. Circuit fermé suivant la revendication 1 qui comprend également une pompe et un réservoir de fluide, lequel fluide est amené à passer par l'agencement d'échange de chaleur précité et le dispositif actionné par un fluide, dans lequel le fluide précité est adapté, après le passage par le dispositif actionné par le fluide, pour être refroidi ou chauffé par le passage du fluide précité par l'agencement d'échange de chaleur.
